# DEMANDE DE BREVET EUROPEEN

(11) **EP 2 624 168 A1**
(43) Date de publication de la demande: **07.08.2013**
(21) Numéro de dépôt: 13152224.5
(22) Date de dépôt: 22.01.2013
(51) Int. Cl.: G06K 7/10

(54) **Procédé et dispositif d'aide au positionnement d'un module de communication en champ proche en relation avec un transpondeur électromagnétique**

(30) Priorité: 02.02.2012 FR 1250981
(71) Demandeur: France Télécom, 75015 Paris (FR)
(72) Inventeur: Baranski, Fabrice, 35000 Rennes (FR)

(57) **Abrégé**

L'invention concerne un procédé et un terminal d'aide au positionnement d'un module de communication en champ proche (NFC) d'un terminal en relation avec un transpondeur électromagnétique placé dans un environnement. Le procédé comprend une étape d'acquisition (AQC) par le terminal d'au moins une image d'une information visuelle représentative de l'emplacement du transpondeur, une étape d'analyse (RECO) de l'image acquise pour déterminer une position indiquant l'emplacement du transpondeur dans l'environnement, une étape de détermination (POS) d'au moins un déplacement du terminal à effectuer permettant de positionner le module de communication de sorte qu'une communication puisse être établie entre le module de communication et le transpondeur et une étape de restitution (REST) d'une information représentative du au moins un déplacement à effectuer.

## Description

### Domaine de l'invention

L'invention se situe dans le domaine des réseaux de télécommunication. Elle concerne un dispositif et un procédé d'aide au positionnement d'un module de communication en champ proche en relation avec un transpondeur électromagnétique.

### Art antérieur

L'invention se rapporte de manière générale aux télécommunications, et plus précisément aux communications sans contact utilisant des technologies radio à courte distance, notamment de type RFID (d'après l'anglais Radio Frequency IDentification). Elle s'applique plus particulièrement aux terminaux équipés de ressources physiques et logicielles incluant un microprocesseur et un module de communication en champ proche (*Near Field -* NF) générant un champ électromagnétique, aptes à communiquer avec des transpondeurs électromagnétiques, qu'ils soient passifs, actifs ou semi-actifs.

Les terminaux en question, désignés par la suite par l'expression "terminaux mobiles", sont des terminaux aptes à être déplacés.

Les communications en champ proche, usuellement appelées NFC (*Near Field Communication*), basées principalement sur la norme ISO (International Standard Organisation) 14443, utilisent des technologies sans-fil pour permettre un échange d'informations entre deux périphériques éloignés d'une courte distance, typiquement inférieure à dix centimètres. Les communications de ce type offrent de nombreuses applications dans les domaines du paiement ou du transport, par exemple.

Les communications en champ proche couvrent deux types d'applications auxquels s'applique l'invention :
- Le premier type met en oeuvre une émulation d'un module de communication en champ proche, présent sur un terminal mobile, pour sécuriser des transactions électroniques entre une application stockée sur le terminal ou le module et une borne externe de lecture qui émet des ondes électromagnétiques pour lire les données sur ce module.
- Le second type d'applications se rapporte à la lecture de données sur des transpondeurs par le terminal mobile ; il s'agit du *tag reading* tel que défini par le *Forum NFC* (association industrielle chargée de promouvoir la mise en oeuvre et la normalisation de la technologie NFC). Une communication NFC est établie entre un maître, ici appelé terminal, et un esclave, ici appelé transpondeur. Par exemple, le terminal est un téléphone mobile et le transpondeur une étiquette associée à un service. De tels services permettent d'accéder à toutes sortes d'informations : applications de transport, de paiement, accès au réseau Internet, envoi d'un SMS ou d'un appel téléphonique, etc. L'établissement de la communication permettra à un utilisateur du terminal de lire les informations contenues dans l'étiquette en approchant son terminal mobile du support (affiche, catalogue, etc.) sur lequel elle est disposée.

Le transpondeur auquel s'applique l'invention, équipé d'un microprocesseur, peut être du type passif (ne nécessitant pas d'alimentation propre), semi-actif (si une partie de son circuit est alimentée) ou actif (si alimenté en totalité).

### Inconvénient de l'art antérieur

Pour établir une communication entre le module de communication en champ proche d'un terminal et un transpondeur électromagnétique, une distance courte entre les deux dispositifs et une bonne orientation de leurs antennes NFC sont nécessaires.

Ces deux conditions peuvent être difficiles à remplir lorsque l'utilisateur ne distingue pas bien le transpondeur vers lequel il doit se diriger.

Il est connu d'associer au transpondeur une signalétique visuelle spécifique, afin d'indiquer à l'utilisateur du terminal l'emplacement exact du transpondeur. Par exemple, une technique connue visant à offrir des services NFC dans la ville propose une signalétique simple et reconnaissable, qui permet à l'utilisateur d'un tel service de repérer facilement le transpondeur pour pouvoir en approcher son terminal mobile. Mais cette signalétique reste difficile à repérer si le transpondeur est entouré d'autres transpondeurs de signalétique proche ou si les signalétiques se brouillent mutuellement à cause de la proximité des transpondeurs.

De plus, lorsque le module de communication en champ proche est intégré dans un terminal mobile, l'utilisateur n'a pas toujours connaissance de l'emplacement du module de communication sur son terminal, de sorte qu'il n'est pas facile de positionner précisément le module de communication en face du transpondeur pour établir une communication.

### Exposé de l'invention

Un des buts de l'invention est d'apporter des améliorations par rapport à l'état de la technique.
Elle propose à cet effet un procédé d'aide au positionnement d'un module de communication en champ proche d'un terminal en relation avec un transpondeur électromagnétique placé dans un environnement. Le procédé comprend les étapes d'acquisition par le terminal d'au moins une image d'une information visuelle représentative de l'emplacement du transpondeur, d'analyse de l'image acquise pour déterminer une position indiquant l'emplacement du transpondeur dans l'environnement, de détermination d'au moins un déplacement du terminal à effectuer permettant de positionner le module de communication de sorte qu'une communication puisse être établie entre le module de communication et le transpondeur, et de restitution d'une information représentative du au moins un déplacement à effectuer.
Corrélativement, l'invention concerne aussi un terminal d'aide au positionnement d'un module de communication en champ proche du terminal en relation avec un transpondeur électromagnétique placé dans un environnement. Le terminal comprend des moyens d'acquisition d'au moins une image d'une information visuelle représentative de l'emplacement du transpondeur, des moyens d'analyse dans l'image acquise d'une position indiquant l'emplacement du transpondeur dans l'environnement, des moyens de détermination d'au moins un déplacement du terminal à effectuer permettant de positionner le module de communication de sorte qu'une communication puisse être établie entre le module de communication et le transpondeur, et des moyens de restitution d'une information représentative du au moins un déplacement à effectuer.

Grâce au procédé, le terminal selon l'invention informe l'utilisateur du bon ou du mauvais positionnement du terminal par rapport au transpondeur pour établir une communication avec celui-ci. Si le positionnement n'est pas correct, il peut lui indiquer dans quelle direction déplacer son terminal afin d'optimiser ses chances d'établir une communication avec le terminal. Grâce à un terminal classique disposant d'une simple caméra, l'utilisateur dispose ainsi d'un moyen simple d'aide au positionnement de son terminal en relation avec un transpondeur.
Ce procédé a l'avantage de ne pas nécessiter d'équipements supplémentaires sur le terminal.

Les différents modes ou caractéristiques de réalisation mentionnés ci-après peuvent être ajoutés indépendamment ou en combinaison les uns avec les autres, aux étapes du procédé défini ci-dessus.
Les différents modes ou caractéristiques de réalisation mentionnés ci-après peuvent être ajoutés indépendamment ou en combinaison les uns avec les autres, aux caractéristiques du terminal défini ci-dessus.

Selon un mode particulier de réalisation de l'invention, le procédé comprend une étape préalable d'enregistrement de la position géographique du transpondeur, et une étape d'activation du procédé lorsque le module de communication est situé à une distance inférieure à un seuil prédéterminé de la position géographique du transpondeur.
Corrélativement, le terminal selon ce mode particulier de réalisation de l'invention comprend des moyens d'enregistrement de la position géographique du transpondeur et des moyens de localisation géographique du module de communication.
Le procédé peut ainsi être activé de manière automatique lorsque le terminal arrive à proximité du transpondeur.

Selon un autre mode particulier de réalisation de l'invention, l'étape de restitution d'une information représentative du au moins un déplacement à effectuer correspond à une restitution visuelle, vocale ou tactile de l'information ou à une combinaison d'une restitution visuelle et/ou vocale et/ou tactile de l'information.
Corrélativement, selon ce mode particulier de réalisation de l'invention, les moyens du terminal pour la restitution d'une information représentative du au moins un déplacement à effectuer correspondent à des moyens de restitution visuelle, ou vocale, ou tactile.
L'utilisateur peut configurer au préalable le mode de restitution de l'information de déplacement qu'il préfère ou selon ses capacités physiques, par exemple s'il est malvoyant ou malentendant.

Selon un autre mode particulier de réalisation de l'invention, la détermination du au moins un déplacement du terminal à effectuer comprend une sous-étape d'obtention de la position du module de communication dans le terminal. Ce mode de réalisation est intéressant lorsque la position du module de communication en champ proche n'a pas été préalablement enregistrée dans la mémoire du terminal.

Selon un autre mode particulier de réalisation de l'invention, l'analyse de l'image acquise comprend une étape d'application d'une technique de reconnaissance de forme appliquée à l'image acquise et une étape de mise en correspondance de la forme reconnue avec des formes d'information visuelle contenues dans une base de données accessible par le terminal ou préalablement enregistrée sur le terminal.
Le terminal n'a pas à télécharger au préalable la forme de l'information visuelle associée au transpondeur. Il extrait cette forme au moment où il en a besoin et possède ainsi la dernière version de la forme pour le cas où la signalétique associée au transpondeur serait modifiée. Dans ce cas, la base de données est accessible via une base de données sur Internet par exemple.

L'invention concerne aussi un programme d'ordinateur comportant des instructions pour l'exécution du procédé d'aide au positionnement selon l'un quelconque des modes particuliers de réalisation de l'invention décrits ci-dessus, lorsque le programme est exécuté par un processeur.

L'invention concerne aussi un support d'enregistrement lisible par un processeur sur lequel est enregistré un programme comportant des instructions pour l'exécution du procédé d'aide au positionnement selon l'un quelconque des modes particuliers de réalisation de l'invention décrits ci-dessus.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 présente les étapes du procédé d'aide au positionnement d'un module de communication en champ proche d'un terminal en relation avec un transpondeur électromagnétique selon un mode particulier de réalisation de l'invention,
- la figure 2 illustre la mise en oeuvre des étapes du procédé d'aide au positionnement selon un mode particulier de réalisation de l'invention,
- la figure 3 présente la structure d'un terminal permettant de mettre en oeuvre le procédé d'aide au positionnement selon un mode particulier de réalisation de l'invention.

### Description d'un mode particulier de réalisation de l'invention

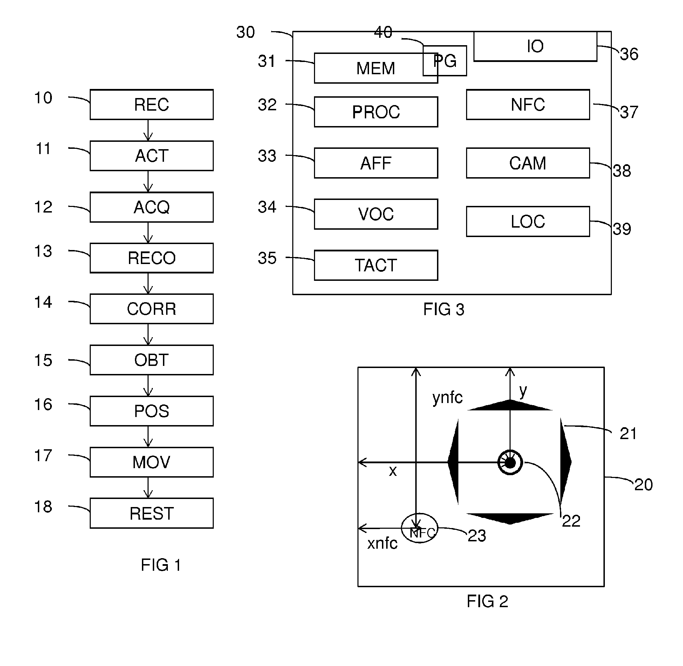

La figure 1 présente les étapes du procédé d'aide au positionnement d'un module de communication en champ proche d'un terminal en relation avec un transpondeur électromagnétique selon un mode particulier de réalisation de l'invention.
Selon un mode particulier de réalisation de l'invention, le procédé comprend une étape 10 d'enregistrement (REC) de la position géographique du transpondeur avec lequel un utilisateur souhaite établir une communication par l'intermédiaire de son terminal équipé d'un module de communication en champ proche.
La position géographique du transpondeur peut être obtenue par le terminal à partir d'une base de données contenant les positions géographiques de points d'intérêts à laquelle le terminal peut accéder par une connexion via un réseau de communication par exemple. L'utilisateur peut aussi entrer manuellement la position géographique d'un point d'intérêt associé à un transpondeur ou du transpondeur lui-même.
Selon ce mode de réalisation particulier de l'invention, lors d'une étape 11, l'activation (ACT) du procédé d'aide au positionnement est effectuée lorsque le terminal détecte qu'il est situé à une distance inférieure à par exemple 2 mètres, de la position géographique du transpondeur. Cette détection peut être mise en oeuvre à l'aide d'un système de géo-localisation du terminal et de la position géographique du transpondeur préalablement enregistrée.
Lorsque le procédé est activé, soit automatiquement par exemple selon le mode de réalisation décrit ci-dessus, soit manuellement par l'utilisateur du terminal, le terminal acquiert (ACQ) grâce à sa caméra, une image ou une série d'images d'une information visuelle représentative de l'emplacement du transpondeur, lors d'une étape 12. L'information visuelle peut par exemple correspondre à une signalétique visuelle telle que représentée par l'élément 21 de la figure 2. Cette signalétique visuelle est positionnée sur le transpondeur de sorte qu'un module de communication en champ proche placé face au centre de cette signalétique (représenté par 22 sur la figure 2) permet au module de communication d'être dans les conditions optimales pour établir une communication avec le transpondeur.
Le terminal analyse ensuite l'image acquise afin d'identifier la position dans l'image acquise de l'information visuelle associée au transpondeur.
Selon un mode particulier de réalisation de l'invention, lors d'une étape 13, de manière connue, le terminal met en oeuvre une étape de reconnaissance de forme (RECO) appliquée à l'image acquise afin d'identifier une forme spécifique représentée par la signalétique visuelle et associée au transpondeur. Cette identification est mise en oeuvre lors de l'étape de reconnaissance de forme par une étape 14 de mise en correspondance (CORR) de la forme reconnue avec des formes d'information visuelle contenues dans une base de données accessible par le terminal ou préalablement enregistrée sur le terminal.
Par exemple, la forme de l'information visuelle peut également avoir été enregistrée sur le terminal et associée à la position géographique du transpondeur.
Selon un mode particulier de réalisation de l'invention, l'information visuelle peut ne pas être positionnée sur le transpondeur mais à proximité du transpondeur. Une information de distance entre l'information visuelle et le transpondeur peut également être enregistrée sur le terminal ou disponible dans la base de données contenant les formes d'information visuelles.
A l'issue des étapes 13 et 14, le terminal a pu mettre en correspondance l'information visuelle représentée sur l'image acquise et une information visuelle connue.
Selon un autre mode particulier de réalisation de l'invention, les caractéristiques de la forme de l'information visuelle peuvent avoir été préalablement enregistrées sur le terminal ou sont accessibles par le terminal via un réseau de communication, de sorte que l'étape de mise en correspondance n'est pas nécessaire. Le terminal met en oeuvre l'étape de reconnaissance de forme appliquée sur l'image acquise en cherchant la position dans l'image acquise des caractéristiques de la forme de l'information visuelle.
Lorsque le terminal a identifié l'emplacement dans l'image acquise de la forme de l'information visuelle, il détermine le centre de l'information visuelle, correspondant à l'élément 22 sur la figure 2. Sur la figure 2, le centre 22 est repéré dans l'image acquise 20 par ses coordonnées x et y.
En référence à la figure 1, le terminal obtient (OBT) lors d'une étape 15 la position du module de communication en champ proche dans le terminal. La position du module dans le terminal est fonction du terminal utilisé. Elle peut être extraite par le procédé ou par l'utilisateur d'une base de données distante accessible par un réseau de communication. Elle peut également être extraite des caractéristiques techniques du terminal, ces caractéristiques techniques pouvant être préalablement enregistrées dans le terminal ou mises à disposition par le fournisseur du terminal. Sur la figure 2, la position du module (NFC) de communication en champ proche dans le terminal est représentée virtuellement sur l'image acquise par l'élément 23. Sa position est repérée par les coordonnées xnfc et ynfc.
Lors d'une étape 17, le terminal détermine (MOV) au moins un déplacement à effectuer par le terminal afin de positionner le module de communication en champ proche en face du centre de l'information visuelle. Ce déplacement peut être déterminé selon la direction verticale, horizontale ou en profondeur par rapport à la distance du terminal au transpondeur.
Le déplacement selon la direction verticale ou horizontale est déterminé par le décalage entre les coordonnées x,y du centre de l'information visuelle et xnfc,ynfc du module de communication NFC. Le déplacement en profondeur peut être déterminé à partir de la mesure dans l'image de la largeur If de la forme. La largeur réelle Lf de la forme est une donnée connue du terminal, elle peut par exemple avoir été obtenue avec les caractéristiques de la forme à identifier ou être associée à la forme mise en correspondance.

La distance D du terminal au transpondeur peut alors être obtenue selon : D = Lf/((If*tpix)/f), tpix correspondant à la taille d'un pixel de la caméra et f correspondant à la distance focale de la caméra.
A partir de la distance du terminal au transpondeur et du décalage déterminé ci-dessus, le terminal traduit la distance et/ou le décalage en une information textuelle de déplacement de type « plus en haut » ou « plus en bas » ou « plus à gauche » ou « plus à droite » ou « plus près » ou en une combinaison de ces informations.
L'information textuelle est restituée (REST) à l'utilisateur lors d'une étape 18. Cette restitution peut être faite sous une forme visuelle par l'affichage sur l'écran du terminal de l'information textuelle de déplacement déterminée précédemment.
Selon un autre mode particulier de réalisation de l'invention, la restitution peut aussi être faite sous une forme vocale par l'intermédiaire de haut-parleurs du terminal et par la vocalisation de l'information textuelle de manière connue grâce à un procédé de vocalisation.
Selon un autre mode particulier de réalisation de l'invention, la restitution peut aussi être faite sous une forme tactile par l'intermédiaire de vibreurs du terminal positionnés sur les quatre bords du terminal et activés selon le déplacement à effectuer. Par exemple, pour un déplacement à gauche, le vibreur situé sur le côté gauche est activé.
Selon un autre mode particulier de réalisation de l'invention, la restitution peut être faite sous la forme d'une combinaison de deux ou trois des modes de restitution décrits ci-dessus.

La figure 3 présente la structure d'un terminal 30 permettant de mettre en oeuvre le procédé d'aide au positionnement selon un mode particulier de réalisation de l'invention.
Le terminal comprend un espace de stockage 31, par exemple une mémoire (MEM), une unité de traitement 32, équipée par exemple d'un microprocesseur (PROC), et pilotée par le programme d'ordinateur (PG) 40, mettant en oeuvre le procédé d'aide au positionnement tel que décrit dans l'invention.
A l'initialisation, les instructions de code du programme d'ordinateur 40 sont par exemple chargées dans une mémoire RAM avant d'être exécutées par le processeur de l'unité de traitement 32. Le microprocesseur de l'unité de traitement 32 met en oeuvre les étapes du procédé d'aide au positionnement d'un module 37 de communication en champ proche (NFC) du terminal 30 en relation avec un transpondeur électromagnétique placé dans un environnement, et notamment les étapes d'acquisition par le terminal 30 d'au moins une image d'une information visuelle représentative de l'emplacement du transpondeur, d'analyse de l'image acquise pour déterminer une position indiquant l'emplacement du transpondeur dans l'environnement, de détermination d'au moins un déplacement du terminal 30 à effectuer permettant de positionner le module 37 de communication de sorte qu'une communication puisse être établie entre le module 37 de communication et le transpondeur, et de restitution d'une information représentative du au moins un déplacement à effectuer, selon les instructions du programme d'ordinateur 40.

Pour cela, le terminal comprend des moyens d'acquisition 38 d'au moins une image d'une information visuelle représentative de l'emplacement du transpondeur, par exemple une caméra (CAM).
Des modules d'analyse de l'image acquise et de détermination d'un déplacement du terminal à effectuer sont pilotés un programme d'ordinateur PG mis en oeuvre par un processeur PROC utilisant une mémoire MEM.
Le terminal comprend aussi des moyens de restitution (33, 34, 35) d'une information représentative du au moins un déplacement à effectuer. Ces moyens correspondent par exemple à l'écran du terminal (AFF) pour une restitution visuelle, aux haut-parleurs (VOC) pour une restitution vocale ou des effecteurs vibro-tactiles (TACT) pour une restitution tactile.
Selon un mode particulier de réalisation de l'invention, le terminal comprend également des moyens de connexion (IO) à un réseau de communication permettant au terminal d'obtenir des données nécessaires à la mise en oeuvre du procédé telles que par exemple la position géographique du transpondeur, les caractéristiques de la forme de l'information visuelle associée au transpondeur, ou encore les caractéristiques techniques du terminal.
Selon un autre mode particulier de réalisation de l'information, le terminal comprend des moyens d'enregistrement (MEM) de la position géographique du transpondeur et des moyens 39 de localisation géographique du module de communication (LOC).
Le terminal peut par exemple correspondre à un terminal téléphonique mobile ou à tout terminal de communication équipé d'un module de communication en champ proche.

## Revendications

1. Procédé d'aide au positionnement d'un module de communication en champ proche (NFC) d'un terminal en relation avec un transpondeur électromagnétique placé dans un environnement, **caractérisé en ce qu'**il comprend les étapes suivantes :
- acquisition (AQC) par le terminal d'au moins une image d'une information visuelle représentative de l'emplacement du transpondeur,
- analyse (RECO) de l'image acquise pour déterminer une position indiquant l'emplacement du transpondeur dans l'environnement,
- détermination (POS) d'au moins un déplacement du terminal à effectuer permettant de positionner le module de communication de sorte qu'une communication puisse être établie entre le module de communication et le transpondeur,
- restitution (REST) d'une information représentative du au moins un déplacement à effectuer.

2. Procédé selon la revendication 1 **caractérisé en ce qu'**il comprend une étape préalable d'enregistrement (REC) de la position géographique du transpondeur, et une étape d'activation (ACT) du procédé lorsque le module de communication est situé à une distance inférieure à un seuil prédéterminé de la position géographique du transpondeur.

3. Procédé selon la revendication 1 **caractérisé en ce que** l'étape de restitution d'une information représentative du au moins un déplacement à effectuer correspond à une restitution visuelle, vocale ou tactile de l'information ou à une combinaison d'une restitution visuelle et/ou vocale et/ou tactile de l'information.

4. Procédé selon la revendication 1 **caractérisé en ce que** la détermination du au moins un déplacement du terminal à effectuer comprend une sous-étape d'obtention (OBT) de la position du module de communication dans le terminal.

5. Procédé selon la revendication 1 **caractérisé en ce que** l'analyse de l'image acquise comprend une étape d'application d'une technique de reconnaissance de forme appliquée à l'image acquise et une étape de mise en correspondance (CORR) de la forme reconnue avec des formes d'information visuelle contenues dans une base de données accessible par le terminal ou préalablement enregistrée sur le terminal.

6. Terminal d'aide au positionnement d'un module de communication en champ proche du terminal en relation avec un transpondeur électromagnétique placé dans un environnement, **caractérisé en ce qu'**il comprend:
- des moyens d'acquisition (CAM) d'au moins une image d'une information visuelle représentative de l'emplacement du transpondeur,
- des moyens d'analyse (PG, MEM,PROC) de l'image acquise pour déterminer une position indiquant l'emplacement du transpondeur dans l'environnement,
- des moyens de détermination (PG, MEM,PROC) d'au moins un déplacement du terminal à effectuer permettant de positionner le module de communication de sorte qu'une communication puisse être établie entre le module de communication et le transpondeur,
- des moyens de restitution (AFF, VOC, TACT) d'une information représentative du au moins un déplacement à effectuer.

7. Terminal selon la revendication 6 **caractérisé en ce qu'**il comprend des moyens d'enregistrement de la position géographique du transpondeur et des moyens de localisation géographique du module de communication.

8. Terminal selon la revendication 6 **caractérisé en ce que** les moyens de restitution d'une information représentative du au moins un déplacement à effectuer correspondent à des moyens de restitution visuelle, ou vocale, ou tactile.

9. Programme d'ordinateur comportant des instructions pour l'exécution du procédé d'aide au positionnement selon l'une quelconque des revendications 1 à 5, lorsque le programme est exécuté par un processeur.

10. Support d'enregistrement lisible par un processeur sur lequel est enregistré un programme comportant des instructions pour l'exécution du procédé d'aide au positionnement selon l'une quelconque des revendications 1 à 5.
